Europäisches Patentamt

European Patent Office

Office européen des brevets

(19)

(11) Publication number: **0 222 444**
**B1**

## (12) EUROPEAN PATENT SPECIFICATION

(45) Date of publication of the patent specification:
17.01.90

(51) Int. Cl.⁴: **F16C 11/06**

(21) Application number: **86201902.3**

(22) Date of filing: **30.10.86**

(54) **Improved ball-joint.**

(30) Priority: **12.11.85 IT 2379185 U**

(43) Date of publication of application:
**20.05.87 Bulletin 87/21**

(45) Publication of the grant of the patent:
**17.01.90 Bulletin 90/3**

(84) Designated Contracting States:
**DE ES FR GB IT**

(56) References cited:
**DE-A- 2 321 158**
**FR-A- 1 399 174**
**GB-A- 1 018 170**
**GB-A- 1 374 261**
**US-A- 3 027 182**
**US-A- 3 357 728**

(73) Proprietor: **OFFICINE MECCANICHE GORIZIANE S.p.A.,
Via Brigata Casale, 70, I-34170 Gorizia(IT)**

(72) Inventor: **Predolin, Sergio, Via Lorenzoni 15,
I-34170 Gorizia(IT)**

(74) Representative: **Faraggiana, Vittorio, Dr. Ing. et al, Ingg.
Guzzi e Ravizza S.r.l. Via Boccaccio, 24,
I-20123 Milano(IT)**

ACTORUM AG

## Description

The present invention relates to a ball-joint that will realize a linkage with three degres of freedom.

More specifically, the ball-joint of the invention comprises a metal bearing which is used in particular as an element of the kinematic chain controlling steering, and also as a component of wheel suspension systems in automotive vehicles generally.

Ball and socket joints are known, wherein the ball of a ball stud is held engaged in bushings forming the bearing surfaces and positioned in a cylindrical housing. A spring presses the bushings against the ball. A sample of this ball-joint is shown in the US-A 3 027 182.

The GB-A 1 018 170 proposes to use a resilient metal disc which acts at its center on the upper bearing to exert a load on this bearing, in addition to the action of a spring. The metal disc is locked by deformation of an edge of the tubular housing, forming a rim. The resilient action of the spring and of the metal disc presses the bearings against the ball and helds the bearing in the tubular housing.

Generally, the rim is formed by rolling or otherwise pressing and deforming the edge of the tubular housing.

According to the prior art, no means are provided for independently maintaining in its position the bearing in the tubular housing. Moreover, when a metal disc is used for urging the ball against the bearing, this disc is loaded in an amount depending on the deformation of the edge to form the rim. This deformation can be controlled only through the tolerance in the dimensions of the housing, requiring a precise machining of this component. In view of the difficulty in obtaining an acceptable total tolerance of the plurality of components, plastic material is largely used to form the bearing surfaces.

The general object of the present invention is to embody a ball-joint the overall structure of which is simpler, and which, when compared with joints of known type, is more economical to manufacture.

To attain this object, the invention embodies a ball-joint comprising a head (11) formed at one end of a threaded part (12) and intended to receive the ball-shaped end (17) of a ball pin (18) with a threaded portion (19) at the end opposite the ball-shaped end (17), wherein the head (11) has a substantially cylindrical through-hole (13, 14) within which there is mounted a bearing seating (16) which has an external surface complementary to the cylindrical hole (13, 14), the through-hole (13, 14) and the bearing seating (16) having abutting shoulders to locate the bearing seating axially, and the bearing seating having a partly spherical internal surface for receiving the ball-shaped end of the ball pin which is (17) pressed against the bearing seating (16) by a upper bearing (21) urged by a spring (22) reacting against a cover (23) locked into the cylindrical hole (13) by deformation of the free edge of the head (11) to form a rim, characterized in that the cover (23) is locked directly against the end of the bearing seating (16) by the deformation of the head.

The structural and functional characteristics of the invention, and its advantages over the known art, will become more apparent from an examination of the following description, referred to the single appended drawing which illustrate an example of a ball-joint based on the innovative principles of the invention.

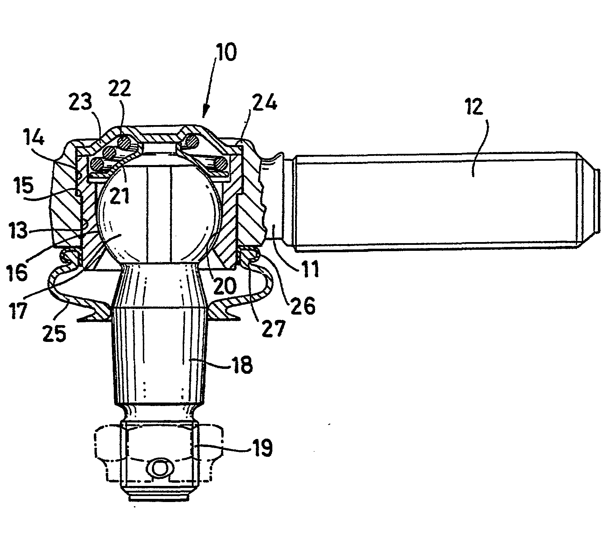

In the drawing, which is a partially sectional view, the ball-joint is indicated overall by 10.

The ball-joint 10 consists structurally of a head 11 formed at one end of a threaded part 12. The head 11 has a cylindrical through-hole comprising two sections 13, 14 the diameters of which are slightly different on account of the presence of an intermediate step 15.

In the sections 13, 14 there can thus be stably housed a bearing seating 16 for a ball-shaped end 17 with which terminates a ball pin 18 with a threaded portion 19 at the end opposite the ball-shaped end 17. The bearing seating 16 can therefore be made internally partly spherical, as shown at 20, and externally with two cylindrical sections matching the sections 13, 14 of the head 11.

The ball-shaped end 17 is kept in position by a upper bearing 21 which is urged against the said ball by a spring 22 which reacts against a cover 23 locked onto the bearing seating 16 by deformation of the head 11, as shown at 24.

The ball-joint is completet by a shroud 25 which prevents the entry of external foreign bodies and at the same time keps the grease, introduced during mounting, inside the joint.

Characteristically, the shroud 25 is applied by means of an elastic ring 26 within a seating 27 formed by the head 11 and by a portion of the bearing seating 16 projecting from the head 11.

As will be evident, this brings further advantages regarding the machining of the head, since this requires no operations in its lower part.

## Claims

1. A ball-joint comprising a head (11) formed at one end of a threaded part (12) and intended to receive the ball-shaped end (17) of a ball pin (18) with a threaded portion (19) at the end opposite the ball-shaped end (17), wherein the head (11) has a substantially cylindrical through-hole (13, 14) within which there is mounted a bearing seating (16) which has an external surface complementary to the cylindrical hole (13, 14), the through-hole (13, 14) and the bearing seating (16) having abutting shoulders to locate the bearing seating axially, and the bearing seating having a partly spherical internal surface for receiving the ball-shaped end of the ball pin which is (17) pressed against the bearing seating (16) by a upper bearing (21) urged by a spring (22) reacting against a cover (23) locked into the cylindrical hole (13) by deformation of the free edge of the head (11) to form a rim, characterized in that the cover (23) is locked directly against the end of the bearing seating (16) by the deformation of the head.

2. A ball-joint according to the claim 1, characterized in that a shroud (25) is applied through the intermediary of an elastic ring (26) within a seat (27) formed by the head (11) and by a portion of the bearing seating (16) projecting from the head (11).

**Patentansprüche**

1. Kugelgelenk mit einem Kopf (11), der an einem Ende eines mit einem Gewinde versehenen Teiles (12) angeordnet und so ausgebildet ist, daß er das kugelförmige Ende (17) eines Kugelzapfens (18) aufnehmen kann, der an dem dem kugelförmigen Ende (17) gegenüberliegenden Ende einen Gewindebereich (19) aufweist, wobei der Kopf (11) eine im wesentlichen zylindrische Durchgangsbohrung (13, 14) aufweist, in der eine Lagerschale (16) vorgesehen ist, deren äußere Oberfläche komplimentär zu der zylindrischen Bohrung (13, 14) ausgebildet ist, wobei die Bohrung (13, 14) und die Lagerschale (16) Anlageschultern zur axialen Festlegung der Lagerschale besitzen und wobei die Lagerschale eine teilweise sphärische Innenoberfläche aufweist zur Aufnahme des kugelförmigen Endes des Kugelzapfens, der durch ein oberes Lager (21) unter dem Druck einer Feder (22), die gegen eine Deckel (23), der in der zylindrischen Bohrung befestigt ist, drückt, gegen die Lagerschale (16) gedrückt wird durch Verformung der freien Kante des Kopfes (11) zur Bildung einer Randfassung, dadurch gekennzeichnet, daß der Deckel (23) durch Verformung des Kopfes direkt gegen das Ende der Lagerschale (16) gedrückt wird.

2. Kugelgelenk nach Anspruch 1, dadurch gekennzeichnet, daß eine Ummantelung (25) angebracht ist durch die Zwischenordnung eines elastischen Ringes (26) in einem am Kopf (11) ausgebildeten Sitz (27) und durch ein Teil der Lagerschale (16), der vom Kopf (11) vorspringt.

**Revendications**

1. Joint à rotule comprenant une tête (11) formée à une extrémité d'une partie filetée (12) et destinée à recevoir l'extrémité sphérique (17) d'un axe (18) à partie extrême sphérique avec une partie filetée (19) à la partie extrême opposée à l'extrémité sphérique (17), dans lequel la tête (11) a un trou traversant (13, 14) substantiellement cylindrique à l'intérieur duquel est monté un siège (16) servant de palier qui a une surface extérieure complémentaire au trou cylindrique (13, 14), le trou traversant (13, 14) et le siège (16) servant de palier ayant des épaulements en butée pour positionner en sens axial le siège servant de palier et ce dernier ayant une surface intérieure partiellement sphérique pour recevoir l'extrémité sphérique (17) de l'axe à partie extrême sphérique qui est pressée contre le siège (16) servant de palier par un coussinet supérieur (21) poussé par un ressort (22) réagissant contre un couvercle (23) bloqué dans le trou cylindrique (13) par une déformation du bord libre de la tête (11) pour former une bordure, caractérisé en ce que le couvercle (23) est bloqué par la déformation de la tête directement contre l'extrémité du siège (16) servant de palier.

2. Joint à rotule selon la revendication 1, caractérisé en ce qu'une pièce protectrice (25) est appliquée par l'intermédiaire d'un anneau élastique (26) dans un siège (27) formé par la tête (11) et par une partie du siège (16) servant de palier se projetant à partir de la tête (11).